(19) Europäisches Patentamt

European Patent Office

Office européen des brevets

(11) **EP 1 526 621 B1**

(12) **EUROPÄISCHE PATENTSCHRIFT**

(45) Veröffentlichungstag und Bekanntmachung des Hinweises auf die Patenterteilung:
**13.12.2006 Patentblatt 2006/50**

(51) Int Cl.:
*H02H 1/00* (2006.01)    *H02H 7/26* (2006.01)

(21) Anmeldenummer: **03450233.6**

(22) Anmeldetag: **22.10.2003**

(54) **Verfahren zur Erkennung eines intermittierenden Erdschlussfehlers**

Method for identifying intermittent ground faults

Procédé d'identification des défauts de terre intermittents

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LV**

(43) Veröffentlichungstag der Anmeldung:
**27.04.2005 Patentblatt 2005/17**

(73) Patentinhaber: **Trench Austria GmbH**
**4060 Leonding (AT)**

(72) Erfinder: **Schinerl, Thomas**
**4050 Traun (AT)**

(74) Vertreter: **Weiser, Andreas**
**Patentanwalt,**
**Hietzinger Hauptstrasse 4**
**1130 Wien (AT)**

(56) Entgegenhaltungen:
**EP-A- 0 999 633**

EP 1 526 621 B1

## Beschreibung

Die vorliegende Erfindung betrifft ein Verfahren zur Erkennung eines von einem intermittierenden Erdschlußfehler befallenen Abganges unter mehreren Abgängen an einer Sammelschiene eines Drehstromnetzes, wobei jedes Auftreten eines transienten Erdschlusses auf einem Abgang detektiert und aus den Auftritten ein Kriterium gewonnen wird, welches einen Abgang als von einem intermittierenden Erdschlußfehler befallen anzeigt.

Intermittierende Erdschlußfehler ("restriking earth faults") treten insbesondere in Drehstromnetzen auf, welche über eine Petersen-Spule geerdet sind, deren Kompensationsstrom z.B. durch Lichtbogenüberschläge oder Isolationsdurchbrüche verursachte transiente Erdschlüsse (sog. "Erdschlußwischer") zwar selbsttätig zum Verlöschen bringen, nicht aber deren Wiederzünden verhindern kann, weil z.B. der zugrundeliegende Leitungs- oder Isolationsfehler fortbesteht.

Herkömmliche Schutzrelais sind nicht in der Lage, intermittierende Erschlußfehler zu erkennen, da sie entweder gar nicht erst auslösen oder sich wieder rückstellen, so daß der zugrundeliegende Leitungsfehler unerkannt und unbehoben bleibt, obwohl tatsächlich eine massive und wiederholte Betriebsstörung vorliegt.

In der EP 0 999 633 A2 wurde daher bereits vorgeschlagen, alle auf einem Abgang detektierten transienten Erdschlüsse zu zählen und den Abgang als von einem intermittierenden Erdschlußfehler befallen anzuzeigen, wenn entweder die Anzahl der transienten Erdschlüsse während einer vorgegebenen Zeitspanne einen Schwellwert überschreitet, oder die Anzahl der transienten Erdschlüsse während der Dauer einer Nullspannungserhöhung einen Schwellwert überschreitet.

Beide Varianten des bekannten Verfahrens sind aufwendig in der Umsetzung, denn sie erfordern einerseits die Protokollierung jedes transienten Erdschlusses über die gesamte vorgegebene Zeitspanne bzw. über die Dauer der Nullspannungserhöhung, was einen entsprechend großen Speicher z.B. in Ringpufferform voraussetzt, und anderseits die Auswertung des gesamten Speichers mit jedem neuen Meßwert, was auch eine entsprechend hohe Rechenleistung erfordert. Darüber hinaus wird jeder Abgang unabhängig von den anderen bewertet, was in der Praxis dann zu Fehlauswertungen führt, wenn Stör- und Übersprecheffekte zwischen den Abgängen auftreten.

Die Erfindung setzt sich zum Ziel, ein Verfahren zur Erkennung eines von einem intermittierenden Erdschlußfehler befallenen Abganges unter mehreren Abgängen an einer Sammelschiene eines Drehstromnetzes zu schaffen, welches die genannten Nachteile überwindet.

Dieses Ziel wird mit einem Verfahren der einleitend genannten Art erreicht, das sich gemäß der Erfindung dadurch auszeichnet, daß für jeden Abgang periodisch ein Meßwert ermittelt wird, der pro Periode:

- bei Auftreten eines transienten Erdschlusses auf diesem Abgang um einen ersten Wert bis maximal zu einem oberen Grenzwert erhöht wird,
- bei Auftreten eines transienten Erdschlusses auf einem anderen Abgang um den ersten Wert bis minimal zu einem unteren Grenzwert erniedrigt wird, und
- bei Ausbleiben eines transienten Erdschlusses um einen zweiten, kleineren Wert in Richtung Null verändert wird,

wobei ein Abgang als befallen angezeigt wird, wenn der Meßwert dieses Abganges einen Schwellwert überschreitet, der größer als der erste Wert und kleiner gleich dem oberen Grenzwert ist.

Das Verfahren der Erfindung erfordert pro Periode und Abgang nur eine einzige Rechenoperation und erübrigt eine aufwendige Speicherung und rechenintensive Auswertung eines gleitenden Zeitfensters, wodurch es überaus einfach implementierbar ist.

Darüber hinaus gehen in die Bewertung eines Abganges nicht nur die aktuellen und vergangenen Erdschlußereignisse des Abganges ein, sondern diese werden durch die neue Art der Meßwertermittlung auch mit den aktuellen und vergangenen Ereignissen der übrigen Abgänge verknüpft, was die Zuverlässigkeit der Erkennung wesentlich erhöht: Das Verfahren der Erfindung beruht auf der Erkenntnis, daß ein gleichzeitiges oder zumindest unmittelbar aufeinanderfolgendes Auftreten von transienten Erdschlüssen auf unterschiedlichen Abgängen ausgesprochen unwahrscheinlich ist und zugunsten einer Erhöhung der Störungsunanfälligkeit vernachlässigt werden kann. Dies wird auf einfache, aber wirkungsvolle Weise erreicht, indem - sobald ein transienter Erdschluß auf einem Abgang erkannt und dieser höhergestuft worden ist - die Meßwerte der übrigen Abgänge herabgestuft werden, was den Störabstand zwischen den Abgängen beträchtlich erhöht.

Die einzelnen Parameter des Verfahrens der Erfindung können mittels praktischen Versuchen für das jeweilige konkrete Drehstromnetz optimiert werden. Ein besonders bevorzugter Parametersatz, der sich in der Praxis als für viele Anwendungsfälle geeignet erwiesen hat, zeichnet sich dadurch aus, daß die genannte Periode die Drehstromnetzperiode, der erste Wert das etwa Zehn- bis Zwanzigfache des zweiten Wertes, der Schwellwert etwa das Doppelte des ersten Wertes, der obere Grenzwert etwa das Doppelte des Schwellwertes und der untere Grenzwert das Negative des oberen Schwellwertes ist.

Zum Detektieren der transienten Erdschlüsse auf den Abgängen kann jedes in der Technik bekannte Verfahren eingesetzt werden, beispielsweise alle in der EP 0 999 633 A2 genannten Verfahren. Gemäß einer ersten vorteilhaften Ausführungsform des Verfahrens der Erfindung erfolgt das Detektieren jedoch bevorzugt durch untereinander Vergleichen der Flankenrichtungen von auf den Abgängen etwa gleichzeitig detektierten Nullstromimpulsen, wobei - wie dem Fachmann bekannt - ein transienter Erdschluß detektiert wird, wenn die Flankenrichtung auf diesem Abgang entgegengesetzt zu den Flankenrichtungen auf den übrigen Abgängen ist. Dabei ist es besonders günstig, wenn der Vergleich der Flankenrichtungen erfindungsgemäß nur dann durchgeführt wird, wenn zuvor für zumindest kurze Zeit auf keinem der Abgänge ein Nullstromimpuls detektiert worden ist, um Fehlmessungen aufgrund von länger anhaltenden transienten Erdschlüssen zu vermeiden. Alternativ kann gemäß einer zweiten bevorzugten Ausführungsform der Erfindung das Detektieren auch durch Vergleichen der Flankenrichtung eines auf dem Abgang detektierten Nullstromimpulses mit der Flankenrichtung eines etwa gleichzeitig detektierten Nullspannungsimpulses erfolgen, wobei - wie dem Fachmann bekannt - ein transienter Erdschluß detektiert wird, wenn diese gleich sind. Beide Varianten sind für das Verfahren der Erfindung besonders geeignet und führen zu einer treffsicheren und störungsunanfälligen Erkennung bei einfacher Implementierung.

Auch die Detektion der Flanken der Nullstrom- bzw. Nullspannungsimpulse kann auf jede in der Technik bekannte Weise durchgeführt werden. Eine besonders einfache und wirkungsvolle Art der Detektion besteht gemäß einem weiteren Merkmal der Erfindung darin, daß die Nullströme bzw. die Nullspannung einem Ausfiltern der Netzfrequenzkomponente(n), gefolgt von einem Differenzieren und einem anschließenden Schwellwertvergleich, unterzogen werden.

Die Erfindung wird nachstehend anhand von in den Zeichnungen dargestellten Ausführungsbeispielen näher erläutert. In den Zeichnungen zeigt:

Fig. 1 ein Blockschaltbild eines beispielhaften Drehstromnetzes, an dem das Verfahren der Erfindung durchgeführt werden kann;
Fig. 2 ein beispielhaftes Zeitdiagramm der Nullströme dreier Abgänge und der Nullspannung im Bereich von zwei transienten Erdschlüssen;
Fig. 3 das Prinzip der Signalverarbeitung zur Flankendetektion anhand des Nullspannungsverlaufes von Fig. 2;
Fig. 4 ein beispielhaftes Zeitdiagramm der Nullströme und der Nullspannung von Fig. 2, nachdem eine Signalverarbeitung wie in Fig. 3 durchgeführt worden ist; und
Fig. 5 das Prinzip der Flankendetektion im Detail.

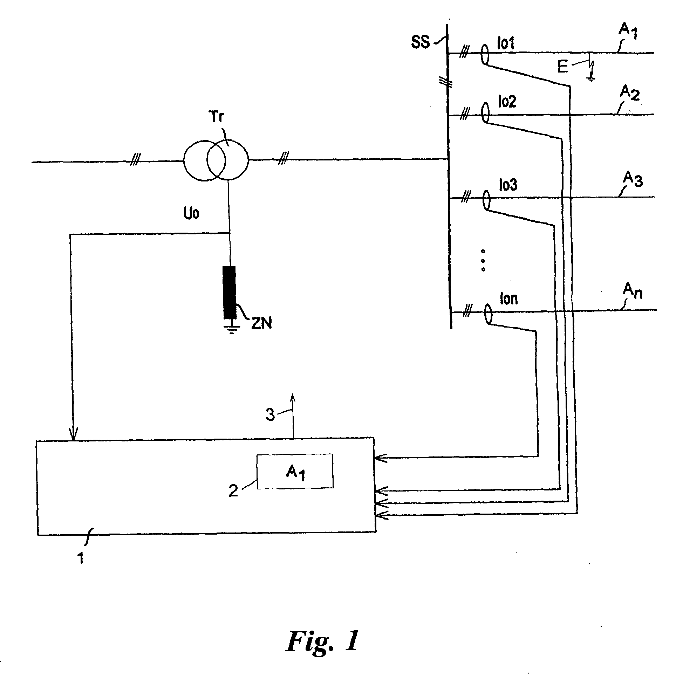

In Fig. 1 ist ein beispielhaftes Drehstromnetz mit einem Transformator Tr dargestellt, dessen Sternpunkt über eine Erdschlußlöschspule (Petersen-Spule) ZN geerdet ist. Der Transformator Tr speist eine Sammelschiene SS, von der Abgänge $A_1$ - $A_n$ abgehen.

Die an der Erdschlußlöschspule ZN auftretende Nullspannung $U_0$ des Drehstromnetzes sowie die Nullströme $I_{01}$ - $I_{0n}$ der Abgänge $A_1$ - $A_n$ sind einer Verarbeitungseinrichtung 1 zugeführt. Die Verarbeitungseinrichtung 1 arbeitet nach dem Verfahren der Erfindung und erkennt, ob und welcher der Abgänge $A_1$ - $A_n$ von einem intermittierenden Erdschlußfehler befallen ist, und zeigt dies beispielsweise auf einer Anzeige 2 an und/oder stellt diese Information an einem Ausgang 3 zur weiteren Verarbeitung zur Verfügung.

In dem gezeigten Beispiel ist der Abgang $A_1$ gerade von einem - symbolisch dargestellten - intermittierenden Erdschlußfehler E befallen, welcher auf der Anzeige 2 angezeigt wird.

Unter einem "intermittierenden Erdschlußfehler" wird in der vorliegenden Beschreibung der Zustand bezeichnet, daß auf einem Abgang wiederholt bzw. gehäuft transiente Erdschlüsse auftreten; unter einen einzelnen "transienten Erdschluß" wird ein kurzzeitiger bzw. vorübergehender Erdschluß verstanden (sog. "Erdschlußwischer").

Erkennung eines intermittierenden Erdschlußfehlers

Für jeden Abgang $A_i$ (i = 1..n) wird periodisch ein Meßwert $G_i$ ermittelt ("aktualisiert"), und zwar bevorzugt einmal pro Drehstromnetzperiode, z.B. bei einer Netzfrequenz von 50 Hz alle 20 ms.

Das Verfahren geht von einem Ruhezustand aus, in welchem alle Meßwerte $G_i$ zunächst Null sind.

Jedes einzelne Auftreten eines transienten Erdschlusses auf einem der Abgänge $A_1$ - $A_n$ wird nun - auf eine weiter unten noch ausführlicher erörterte Art und Weise - detektiert.

Bei Auftreten eines transienten Erdschlusses in einer Periode wird der Meßwert jenes Abganges, auf welchem der transienter Erdschluß aufgetreten ist - im gezeigten Beispiel der Abgang $A_1$ -, um einen ersten vorgegebenen Wert F erhöht:

$$G_1 \ := \ G_1 \ + \ F$$

und zwar bis maximal zu einem oberen Grenzwert $G_{max}$:

$$G_1 \leq G_{max},$$

während die Meßwerte $G_2$ - $G_n$ der übrigen Abgänge $A_2$ - $A_n$ um einen Wert, bevorzugt (aber nicht zwingend) denselben Wert F, erniedrigt werden:

$$G_{2..n} := G_{2..n} - F$$

und zwar bis minimal zu einem unteren Grenzwert $G_{min}$:

$$G_{2..n} \geq G_{min}$$

Wird in dieser Periode auf keinem der Abgänge $A_1$ - $A_n$ ein transienter Erdschluß erkannt, werden alle Meßwerte um einen zweiten vorgegebenen Wert D in Richtung Null verändert, welcher signifikant kleiner ist als der erste Wert F (d.h. D << F):

$$\text{wenn } G_i < 0: \quad ==> \quad G_i := G_i + D$$

$$\text{wenn } G_i > 0: \quad ==> \quad G_i := G_i - D$$

Überschreitet der Meßwert $G_i$ für einen Abgang $A_i$ einen einstellbaren Schwellwert S, wird der Abgang $A_i$ als von einem intermittierenden Erdschluß E befallen angezeigt:

$$\text{wenn } G_i > S: \quad ==> \quad \text{Anzeige } A_i$$

Die Parameter F, D, $G_{max}$, $G_{min}$ und S des Verfahrens können mittels praktischer Versuche für das jeweilige konkrete Drehstromnetz optimiert werden.

In einem beispielhaften Verfahren, welches sich in der Praxis als für viele Anwendungsfälle geeignet erwiesen hat, wurden die Parameter wie folgt gewählt:

$$F \quad = \quad 10*D \; .. \; 20*D$$

$$S \quad = \quad 2*F$$

$$G_{max} \quad = \quad 2*S$$

$$G_{min} \quad = \quad -G_{max}$$

In einer bevorzugten Implementierung des Verfahrens wurden die folgenden Werte gewählt:

$$F \quad = \quad 15$$

4

$$D \quad = \quad 1$$

$$S \quad = \quad 30$$

$$G_{max} \quad = \quad 60$$

$$G_{min} \quad = \quad -60$$

Diese Parameter führten zu einer besonders treffsicheren und verläßlichen Anzeige intermittierender Erdschlußfehler unter verschiedensten Netzbedingungen.

Detektion der transienten Erdschlüsse

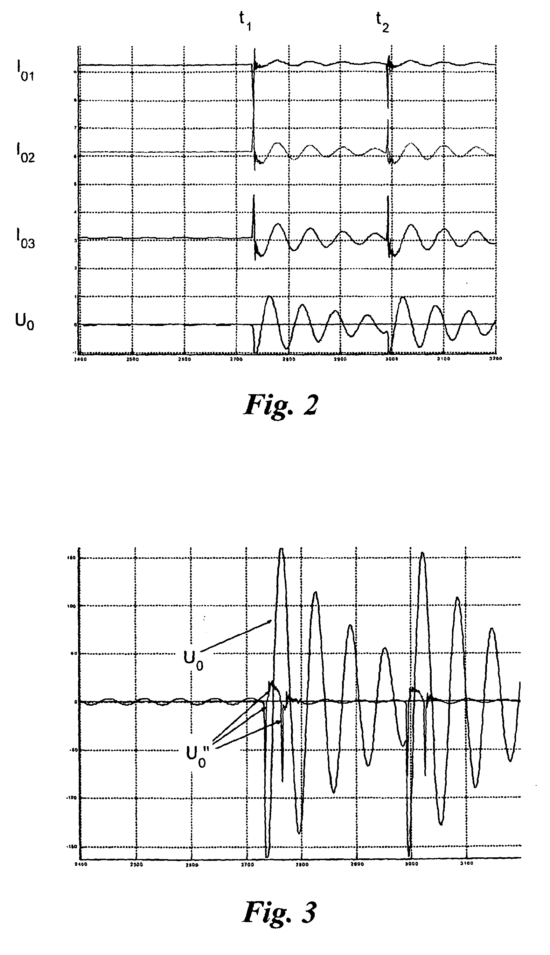

Die Detektion eines transienten Erdschlusses auf einem der Abgänge wird anhand der Fig. 2 bis 5 näher erläutert.

Fig. 2 zeigt die Nullströme $I_{01}$ - $I_{03}$ der ersten drei Abgänge $A_1$ - $A_3$ sowie die Nullspannung $U_0$ im Bereich um das Auftreten zweier transienter Erdschlüsse zu den Zeitpunkten $t_1$ und $t_2$. Diese vier Signale werden der folgenden Signalverarbeitung unterworfen:

Zur Eliminierung der Netzfrequenzkomponente (und hier: aller ihrer ungeradzahligen Harmonischen) wird folgende Filterfunktion angewandt:

$$U_0'(t) \ = \ U_0(t) \ + \ U_0(t \ - \ T/2)$$

wobei T die Drehstromnetzperiode ist. Zur weiteren Flankendetektion wird eine einfache Differenzbildung als Differentiation eingesetzt:

$$U_0''(t) \ = \ U_0'(t) \ - \ U_0'(t \ - \ T_s)$$

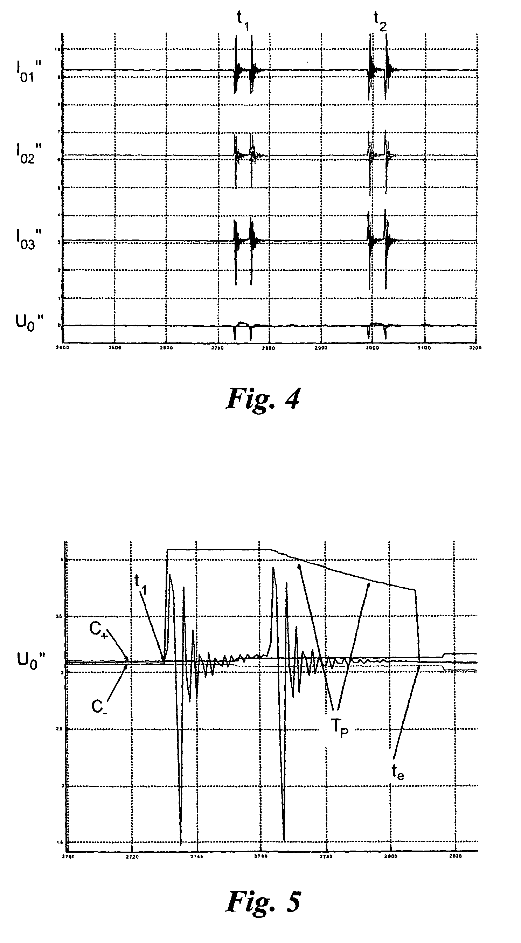

wobei $T_s$ die Abtastperiode ist. Das Ergebnis der Verarbeitung ist in Fig. 3 für die Nullspannung im Detail und in Fig. 4 in Analogie zu Fig. 2 für die drei Nullströme und die Nullspannung gezeigt.

Für jeden transienten Erdschluß bei $t_1$ und $t_2$ zeigen die Signale jeweils zwei Spitzen, wobei die erste Spitze die vordere Flanke des Nullstrom- bzw. Nullspannungsimpulses repräsentiert, hingegen die zweite Spitze auf die hintere Impulsflanke zurückzuführen ist und daher nicht berücksichtigt werden darf.

Die Richtung der ersten Spitze gibt somit die Flankenrichtung des jeweiligen Nullstrom- bzw. Nullspannungsimpulses an und kann für die Ermittlung, auf welchem Abgang $A_i$ der transiente Erdschluß aufgetreten ist, auf bekannte Art herangezogen werden, z.B. indem, wenn

a) die Flankenrichtung auf einem Abgang (hier: $A_1$) entgegengesetzt zu den Flankenrichtungen auf allen übrigen Abgängen (hier: $A_2$, $A_3$) ist, oder
b) die Flankenrichtung auf einem Abgang (hier: $A_1$) gleich der Flankenrichtung des Nullspannungsimpulses $U_0$ ist,

der transiente Erdschluß als auf diesem Abgang aufgetreten detektiert wird.

Detektion der Flankenrichtung

Fig. 5 zeigt die Detektion der Flankenrichtung anhand der beiden Spitzen von $U_0''$ für den transienten Erdschluß des Zeitpunktes $t_1$ im Detail. Das Auftreten der ersten Spitze wird durch Vergleichen von $U_0''$ mit positiven und negativen Schwellwerten $C_+$ bzw. $C_-$ detektiert, wobei die Richtung der Schwellwertüberschreitung (positiv oder negativ) die Flankenrichtung des Nullspannungsimpulses angibt und für die obige Auswertung herangezogen wird.

Die Schwellwerte $C_+$ und $C_-$ werden bevorzugt - ausgehend von einem Minimalwert zur Unterdrückung des Signalrauschens - an die mittlere Amplitude der Netzfrequenzkomponente automatisch angepaßt, wie die Schwellwertsprünge am rechten Rand des Diagramms zeigen; dadurch kann eine optimale Empfindlichkeit für unterschiedlich große Meßsignale erreicht werden.

Sobald die erste Schwellwertüberschreitung bei $t_1$ detektiert worden ist, wird während einer Zeitspanne $T_p$ die weitere Überwachung von Schwellwertüberschreitungen gesperrt, um zu gewährleisten, daß die zweite Spitze nicht berücksichtigt wird. Die zweite Spitze tritt in der Regel etwa eine halbe Drehstromnetzperiode nach der ersten Spitze auf. Erst nach dem Abklingen der zweiten Spitze zum Zeitpunkt $t_e$, wenn das Signal z.B. für mindestens eine viertel Drehstromnetzperiode wieder innerhalb der Schwellwerte $C_+$ und $C_-$ liegt, wird die Detektion des Nullspannungsimpulses (oder Nullstromimpulses) für beendet angesehen.

Um sicherzustellen, daß auch bei länger anhaltenden oder bei rasch aufeinanderfolgenden transienten Erdschlüssen auf unterschiedlichen Abgängen, was sich in zeitlich überlappenden Nullstromimpulsen der einzelnen Abgänge äußern kann, im Falle der Anwendung der Verfahrensvariante a) ein korrekter Vergleich der Flankenrichtungen möglich ist, wird der Flankenrichtungsvergleich nur freigegeben, wenn zuvor für zumindest kurze Zeit auf keinem der Abgänge ein Nullstromimpuls detektiert worden ist. Dadurch ist gewährleistet, daß sich alle in einer Periode erkannte Schwellwertüberschreitungen auf ein und denselben transienten Erdschluß beziehen, so daß der Flankenrichtungsvergleich durchgeführt werden kann.

Die Erfindung ist nicht auf die dargestellten Ausführungsbeispiele beschränkt, sondern umfaßt alle Varianten und Modifikationen, die in den Rahmen der angeschlossenen Ansprüche fallen.

**Patentansprüche**

1. Verfahren zur Erkennung eines von einem intermittierenden Erdschlußfehler befallenen Abganges unter mehreren Abgängen an einer Sammelschiene eines Drehstromnetzes,
   wobei jedes Auftreten eines transienten Erdschlusses auf einem Abgang detektiert und aus den Auftritten ein Kriterium gewonnen wird, welches einen Abgang als von einem intermittierenden Erdschlußfehler befallen anzeigt,
   **dadurch gekennzeichnet,**
   **daß** für jeden Abgang periodisch ein Meßwert ermittelt wird, der pro Periode:

   - bei Auftreten eines transienten Erdschlusses auf diesem Abgang um einen ersten Wert bis maximal zu einem oberen Grenzwert erhöht wird,
   - bei Auftreten eines transienten Erdschlusses auf einem anderen Abgang um den ersten Wert bis minimal zu einem unteren Grenzwert erniedrigt wird, und
   - bei Ausbleiben eines transienten Erdschlusses um einen zweiten, kleineren Wert in Richtung Null verändert wird,

   wobei ein Abgang als befallen angezeigt wird, wenn der Meßwert dieses Abganges einen Schwellwert überschreitet, der größer als der erste Wert und kleiner gleich dem oberen Grenzwert ist.

2. Verfahren nach Anspruch 1, **dadurch gekennzeichnet, daß** die genannte Periode die Drehstromnetzperiode, der erste Wert das etwa Zehn- bis Zwanzigfache des zweiten Wertes, der Schwellwert etwa das Doppelte des ersten Wertes, der obere Grenzwert etwa das Doppelte des Schwellwertes und der untere Grenzwert das Negative des oberen Schwellwertes ist.

3. Verfahren nach Anspruch 1 oder 2, **dadurch gekennzeichnet, daß** das Detektieren eines transienten Erdschlusses auf einem Abgang in an sich bekannter Weise durch untereinander Vergleichen der Flankenrichtungen von auf den Abgängen etwa gleichzeitig detektierten Nullstromimpulsen erfolgt.

4. Verfahren nach Anspruch 3, **dadurch gekennzeichnet, daß** der Vergleich der Flankenrichtungen nur durchgeführt wird, wenn zuvor für zumindest kurze Zeit auf keinem der Abgänge ein Nullstromimpuls detektiert worden ist.

5. Verfahren nach Anspruch 1 oder 2, **dadurch gekennzeichnet, daß** das Detektieren eines transienten Erdschlusses auf einem Abgang in an sich bekannter Weise durch Vergleichen der Flankenrichtung eines auf dem Abgang detektierten Nullstromimpulses mit der Flankenrichtung eines etwa gleichzeitig detektierten Nullspannungsimpulses erfolgt.

6. Verfahren nach einem der Ansprüche 3 bis 5, **dadurch gekennzeichnet, daß** zur Flankendetektion eines Nullstrom- bzw. Nullspannungsimpulses die Nullströme bzw. die Nullspannung einem Ausfiltern der Netzfrequenzkomponente

EP 1 526 621 B1

(n), gefolgt von einem Differenzieren und einem anschließenden Schwellwertvergleich, unterzogen werden.

## Claims

**1.** A method for identifying an outgoing feeder affected by an intermittent earth leakage fault among a plurality of outgoing feeders on a busbar of a three-phase system,
each occurrence of a transient earth leakage at an outgoing feeder being detected and a criterion being obtained from the occurrences, which criterion indicates that an outgoing feeder is affected by an intermittent earth leakage fault,
**characterised in that**
for each outgoing feeder a measured value is periodically determined which, per period:

- is increased on the occurrence of a transient earth leakage at this outgoing feeder by a first value at most up to an upper limit value,
- is reduced on occurrence of a transient earth leakage at another outgoing feeder by the first value at most down to a lower limit value, and
- is modified in the absence of a transient earth leakage by a second, smaller value towards zero,

wherein an outgoing feeder is indicated as being affected if the measured value of this outgoing feeder exceeds a threshold value which is greater than the first value and less than or equal to the upper limit value.

**2.** A method according to claim 1, **characterised in that** the stated period is the three-phase system period, the first value is approximately ten to twenty times the second value, the threshold value is approximately twice the first value, the upper limit value is approximately twice the threshold value and the lower limit value is the negative of the upper threshold value.

**3.** A method according to claim 1 or claim 2, **characterised in that** detection of a transient earth leakage at an outgoing feeder takes place in a manner known per se by mutual comparison of the edge directions of zero current pulses detected approximately simultaneously at the outgoing feeders.

**4.** A method according to claim 3, **characterised in that** comparison of the edge directions is only performed if no zero current pulse has previously been detected at any of the outgoing feeders for at least a short time.

**5.** A method according to claim 1 or claim 2, **characterised in that** detection of a transient earth leakage at an outgoing feeder takes place in a manner known per se by comparison of the edge direction of a zero current pulse detected at the outgoing feeder with the edge direction of a zero voltage pulse detected approximately simultaneously.

**6.** A method according to any one of claims 3 to 5, **characterised in that**, for edge detection of a zero current or zero voltage pulse, the zero currents or the zero voltage are subjected to filtering out of the system frequency component(s), followed by differentiation and a subsequent threshold value comparison.

## Revendications

**1.** Procédé d'identification d'un circuit de sortie affecté d'un défaut de mise à la terre intermittent parmi plusieurs circuits de sortie au niveau d'une barre collectrice d'un réseau de courant triphasé,
dans lequel chaque apparition d'un défaut de mise à la terre transitoire sur un circuit de sortie est détectée et, à partir de ces apparitions, un critère est déduit, lequel désigne un circuit de sortie comme étant affecté d'un défaut de mise à la terre intermittent,
**caractérisé en ce que**
pour chaque circuit de sortie, une valeur de mesure est déterminée périodiquement, laquelle, à chaque période :

- est augmentée d'une première valeur au maximum jusqu'à une valeur limite supérieure, lors de l'apparition d'un défaut de mise à la terre transitoire sur ce circuit de sortie
- est diminuée de la première valeur au minimum jusqu'à une valeur limite inférieure lors de l'apparition d'un défaut à la terre transitoire sur un autre circuit de sortie, et
- est modifiée d'une deuxième valeur plus faible dans la direction de zéro si le défaut à la terre transitoire n'apparaît pas,

dans lequel un circuit de sortie est désigné comme affecté si la valeur de mesure de ce circuit de sortie dépasse une valeur de seuil qui est supérieure à la première valeur et inférieure ou égale à la valeur limite supérieure.

2. Procédé selon la revendication 1, **caractérisé en ce que** la période mentionnée est la période du réseau de courant triphasé, la première valeur est environ dix à vingt fois la deuxième valeur, la valeur de seuil est environ le double de la première valeur, la valeur limite supérieure est environ le double de la valeur de seuil et la valeur limite inférieure est l'opposé de la valeur de seuil supérieure.

3. Procédé selon la revendication 1 ou 2, **caractérisé en ce que** la détection d'un défaut de mise à la terre transitoire sur un circuit de sortie est effectuée de manière connue par comparaison des directions des flancs d'impulsions de courant résiduel détectées approximativement en même temps sur les circuits de sortie.

4. Procédé selon la revendication 3, **caractérisé en ce que** la comparaison des directions des flancs n'est effectuée que si au préalable aucune une impulsion de courant résiduel n'a été détectée sur aucun des circuits de sortie pendant au moins une courte période de temps.

5. Procédé selon la revendication 1 ou 2, **caractérisé en ce que** la détection d'un défaut de mise à la terre transitoire sur un circuit de sortie est obtenue de manière connue grâce à la comparaison de la direction des flancs d'une impulsion de courant résiduel détecté sur le circuit de sortie avec la direction des flancs d'une impulsion de tension résiduelle détectée approximativement en même temps.

6. Procédé selon l'une des revendications 3 à 5, **caractérisé en ce que** pour la détection des flancs d'une impulsion de courant résiduel ou d'une impulsion de tension résiduelle, les courants résiduels ou la tension résiduelle sont soumis à un filtrage des composantes à la fréquence du réseau, suivi d'une différence et d'une comparaison à la valeur de seuil.

*Fig. 1*

$t_1$      $t_2$

$I_{01}$

$I_{02}$

$I_{03}$

$U_0$

**Fig. 2**

$U_0$

$U_0''$

**Fig. 3**

**Fig. 4**

**Fig. 5**